# FASCICULE DE BREVET EUROPEEN

(11) **EP 0 800 130 B1**
(45) Date de publication et mention de la délivrance du brevet: **31.07.2002**
(21) Numéro de dépôt: 97400661.1
(22) Date de dépôt: 24.03.1997
(51) Int. Cl.: G05D 23/13

(54) **Dispositif thermostatique, notamment pour circuit de refroidissement d'un moteur thermique**
Thermostatanordnung, insbesondere für den Kühlkreislauf einer Brennkraftmaschine
Thermostatic device, particularly for the cooling system of an internal combustion engine

(30) Priorité: 04.04.1996 FR 9604259
(43) Date de publication de la demande: 08.10.1997
(73) Titulaire: VERNET S.A., 91291 Arpajon Cédex (FR)
(72) Inventeur: Mabboux, Lionel Jean, 91700 Sainte Geneviève Des Bois (FR); Bouloy, Alain Bernard Armand, 91680 Etrechy (FR)
(74) Mandataire: Jacobson, Claude

(56) Documents cités:
- DE-A- 4 243 228
- DE-A- 4 416 240
- GB-A- 2 108 663
- US-A- 4 248 374

## Description

La présente invention concerne les dispositifs thermostatiques et notamment de tels dispositifs permettant d'effectuer un réglage de débit de fluide dans un circuit de refroidissement de moteur thermique.

On connaît par le brevet FR-A-94 01 862 un thermostat comprenant un boîtier en matériau synthétique auquel est intégré un élément thermostatique comportant une partie fixe et une partie mobile, le déplacement de cette partie mobile sous l'influence de la température du fluide circulant dans le boîtier entraînant une action sur un organe obturateur, commandé par cet élément thermostatique. Ce déplacement de la partie mobile de l'élément thermostatique, sous l'effet d'une variation de température, s'effectue à l'encontre de l'action d'un ressort de rappel qui prend appui sur une pièce métallique.

Selon les dispositions décrites dans le brevet antérieur précité, en position de stockage ou de transport du dispositif, la pièce métallique servant d'appui au ressort prend elle-même appui sur des bras venus de moulage avec le boîtier et munis d'encoches dirigées vers l'intérieur du boîtier et dans lesquelles sont reçues les extrémités de ladite pièce métallique. Par contre, dès que le boîtier est monté en position d'utilisation sur un support tel qu'un boîtier complémentaire, grâce à la présence sur ce dernier de deux montants ou bras de support, la pièce métallique servant d'appui au ressort n'est plus en appui contre les bras du boîtier, comme dans la position de transport mais sur les montants du support qui, travaillant en compression, sont de nature à reprendre de façon efficace et fiable les efforts exerçés par le ressort relativement puissant, de rappel de la partie mobile du dispositif.

La solution décrite dans ce brevet antérieur est satisfaisante, en ce qui concerne la reprise des efforts et la fiabilité, mais elle présente toutefois un inconvénient car il est nécessaire que le support sur lequel est fixé le boîtier soit conçu de façon spécifique et comporte des montants adaptés pour coopérer avec la pièce d'appui du ressort. Cet inconvénient est d'autant plus sérieux que dans un certain nombre de cas, il est souhaitable de pouvoir monter le dispositif thermostatique directement sur la culasse d'un moteur, ce que ne permet pas de réaliser le dispositif antérieur évoqué ci-dessus.

On connaît également, par le brevet DE 44 16 240, un thermostat du type général décrit plus haut, mais dans lequel un dispositif servant d'appui au ressort comporte un organe prenant lui-même appui, en position de stockage ou de transport du thermostat, sur des saillies intemes de branches longitudinales du boîtier, et un organe prenant appui, en position d'utilisation du thermostat, sur une surface inteme également spécialement prévue à cette fin, du support du boîtier.

Le but de l'invention est de proposer un dispositif thermostatique du type général décrit dans les brevets précités mais qui permette la reprise des efforts exercés par le ressort de rappel de la partie mobile de l'élément thermostatique, sans aménagement particulier du support sur lequel doit être monté le boîtier.

A cet effet, l'invention a pour objet un dispositif thermostatique, comprenant un boîtier au moins en partie en matière synthétique, comportant un corps adapté pour être monté et fixé sur un support délimitant un logement, un élément thermostatique disposé dans le corps et comportant une partie fixe par rapport à ce dernier et une partie mobile suivant une direction axiale, susceptible de se déplacer par rapport à la partie fixe, sous l'influence d'une variation de température, à l'encontre de l'action d'un ressort de rappel qui prend appui sur une pièce d'appui métallique s'étendant radialement en partie à l'extérieur d'une partie du corps, le corps comportant des moyens de maintien axial de ladite pièce d'appui, qui sont actifs lorsque le boîtier n'est pas monté sur le support, ce dernier comportant des moyens de maintien axial de ladite pièce d'appui, qui se substituent aux moyens de maintien associés au corps dès lors que le boîtier est monté et fixé sur le support, caractérisé en ce que la pièce servant d'appui au ressort de rappel comporte des tronçons s'étendant le long et à l'extérieur de cette partie du corps et se prolongeant par des portions sensiblement radiales qui sont adaptées pour venir en appui contre des portions correspondantes, en regard, d'une surface du support, lorsque le boîtier est monté et fixé sur le support.

Suivant d'autres caractéristiques :
- le corps du boîtier comporte une partie qui s'étend axialement en direction de la pièce métallique et qui comporte des logements débouchant vers l'extérieur et avec lesquels ladite pièce métallique coopère lorsque le boîtier n'est pas monté sur son support;
- le corps du boîtier comporte au moins deux bras qui s'étendent axialement en direction de la pièce métallique et qui comportent chacun une encoche débouchant vers l'extérieur, ladite pièce métallique comportant une coupelle annulaire dans laquelle prend appui le ressort et au moins deux branches s'étendant à partir de ladite coupelle et qui délimitent chacune, d'une part, une patte radiale s'étendant vers l'extérieur et adaptée pour venir en appui sur le support et, d'autre part, une patte s'étendant vers l'intérieur et qui est reçue dans l'encoche du bras correspondant;
- le corps du boîtier comporte une collerette qui s'étend radialement vers l'extérieur et qui est pourvue de moyens de fixation sur le support, la face de cette collerette dirigée vers le support portant une garniture d'étanchéité;
- les portions radiales d'extrémité de la pièce métallique seterminent radialement à l'intérieur de la garniture d'étanchéité;
- lorsque le boîtier n'est pas monté sur son support, un jeu axial est ménagé entre les portions radiales de la pièce métallique et la surface radiale adjacente du corps du boîtier, ce jeu étant tel qu'il est au moins partiellement rattrapé lorsque le boîtier est monté et fixé sur le support ;
- des moyens élastiques sont disposés entre le corps du boîtier et les portions sensiblement radiales de l'étrier.

L'invention va être décrite plus en détail ci-dessous en se référant aux dessins annexés, donnés uniquement à titre d'exemple et sur lesquels :
- la figure 1 est une vue en coupe longitudinale d'un dispositif thermostatique suivant l'invention en position de stockage ou de transport ;
- la figure 2 est une vue en coupe suivant la ligne 2-2 de la figure 1, l'élément thermostatique étant omis ;
- la figure 3 est une vue de dessous de ce dispositif, l'élément thermostatique étant omis ;
- la figure 4 est une vue en coupe longitudinale du dispositif monté sur un support ; et
- les figures 5 et 6 sont deux vues de détail, en coupe, représentant deux variantes.

Le dispositif thermostatique représenté aux dessins peut être utilisé pour régler un débit de fluide, par exemple le fluide de refroidissement d'un moteur à combustion interne. On ne décrira pas ici en détail le circuit de fluide proprement dit, qui est étranger au perfectionnement objet de l'invention et qui est connu en soi.

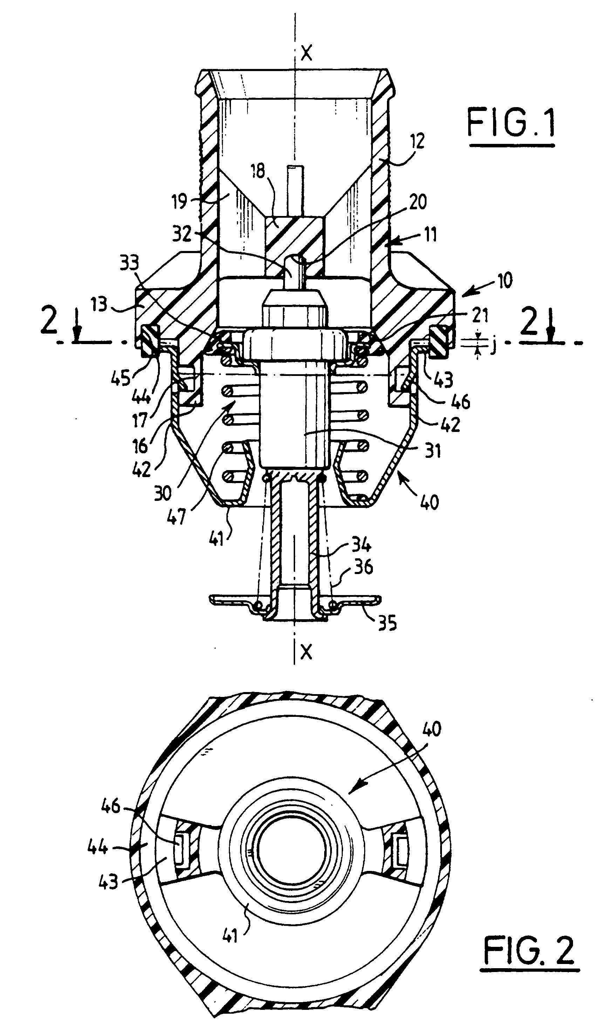

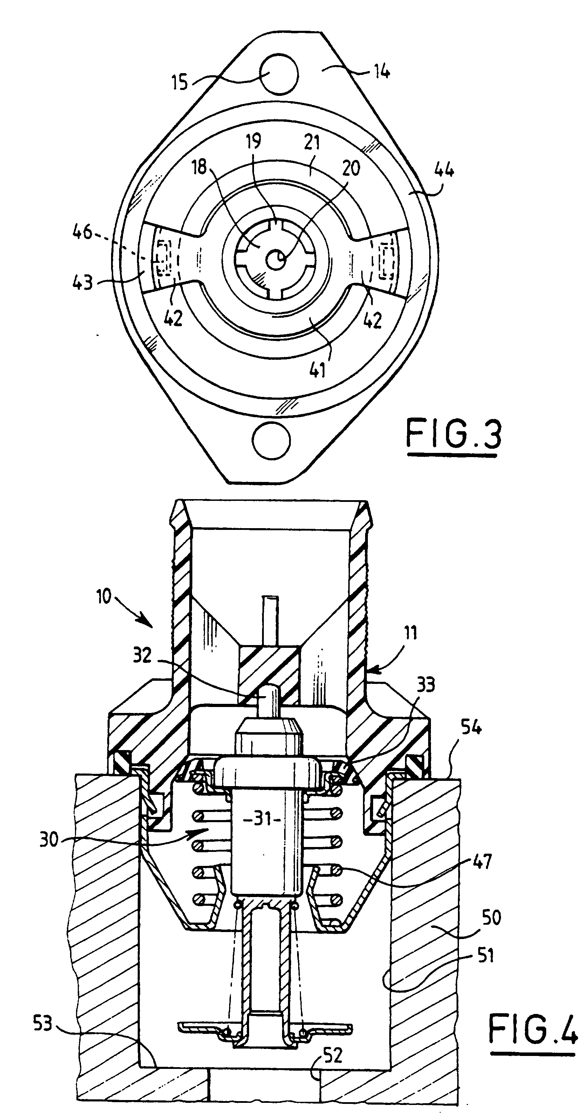

Tel qu'il est représenté sur la figure 1, le dispositif comprend un boîtier 10 d'axe X-X incorporant un élément thermostatique 30. Le boîtier comporte principalement un corps 11 moulé en matière plastique ou d'une façon plus générale en un matériau synthétique. Le corps a une forme générale tubulaire comportant une partie supérieure 12 sur laquelle on peut venir raccorder une durite du circuit de refroidissement. Une collerette 13 s'étend radialement vers l'extérieur et comporte deux oreilles 14 dans lesquelles sont ménagés des orifices 15 permettant le passage d'organes de fixation (Fig. 3). Les moyens de fixation envisagés ici peuvent être constitués par des vis, mais le corps et son support pourraient être munis de moyens de fixation différents, par exemple du type à baïonnette tel que décrit dans le brevet FR 94 01 862 ou de tout autre type approprié.

Dans sa partie inférieure en considérant la figure 1, le corps est prolongé par deux bras 16 munis chacun d'une encoche 17 débouchant radialement vers l'extérieur du corps.

Ce dernier comporte à l'intérieur de sa partie supérieure un pontet 18 venu de moulage et relié à la partie tubulaire par des bras radiaux 19, par exemple deux, trois ou quatre comme représenté aux dessins. Ce pontet comporte dans sa face inférieure un trou borgne 20.

Dans une zone située sensiblement au niveau de la collerette 13, et donc au-dessus des bras 16, le corps délimite un siège 21.

L'élément thermostatique 30 disposé dans ce corps ne sera pas décrit en détail car il peut être de construction classique. Il comporte un corps 31 contenant un matériau thermiquement dilatable, tel que de la cire. A la partie supérieure du corps 31 fait saillie un doigt 32 qui est reçu dans le trou borgne 20 du pontet et qui est donc fixe par rapport au boîtier 10, alors que le corps 31 constitue une partie mobile par rapport à ce boîtier, dont les déplacements sont fonction de la température du fluide environnant. Le corps 31 de l'élément thermostatique porte dans une partie intermédiaire de sa longueur un obturateur coopérant avec le siège 21.

A sa partie inférieure en considérant la Fig. 1, l'élément thermostatique est prolongé vers le bas par une tige creuse 34 portant à son extrémité une coupelle 35 qui comme on le verra par la suite remplit une fonction d'obturateur. Cette coupelle peut coulisser le long de la tige et elle est sollicitée en position éloignée de l'élément thermostatique par un ressort 36.

Le dispositif est complété par un étrier métallique 40 comportant à sa partie inférieure une coupelle 41 à partir de laquelle s'étendent deux branches 42 qui comportent deux tronçons parallèles à l'axe du dispositif, s'étendant le long et à l'extérieur des deux bras inférieurs 16 du corps 11. Les extrémités de ces deux branches de l'étrier sont repliées radialement vers l'extérieur pour former deux pattes 43 qui se terminent en deçà d'une bague d'étanchéité 44 reçue dans une gorge 45 ménagée dans la collerette radiale du corps 11.

Deux autres pattes 46 sont formées par crevé dans les portions axiales des branches 42 de l'étrier, ces deux pattes étant repliées radialement vers l'intérieur et étant reçues dans les encoches 17 des bras 16.

Un ressort relativement puissant 47 est disposé entre l'obturateur 33 solidaire de la partie mobile de l'élément thermostatique et la coupelle 41 de l'étrier.

On notera par ailleurs que dans la position représentée à la figure 1, un jeu axial de quelques dixièmes de millimètres est prévu entre les extrémités radiales 43 des branches de l'étrier et la face radiale adjacente de la collerette 14.

Dans la position de stockage ou de transport représentée sur la figure 1, le boîtier 10 contenant l'élément thermostatique 30 constitue un sous-ensemble dont la solidarisation est assurée par la venue en butée des pattes 46 contre la face inférieure des encoches 17.

La position de montage de ce boîtier est visible sur la figure 4. On a représenté schématiquement sur cette figure un support 50 qui peut être un boîtier complémentaire, une partie de la culasse d'un moteur à combustion interne ou tout autre support sur lequel le dispositif thermostatique doit être placé. Ce support délimite un logement 51 dans lequel est reçue la partie inférieure du sous-ensemble décrit précédemment. A la partie inférieure de ce logement débouche un conduit 52 de diamètre plus faible que le logement 51, ce qui délimite un épaulement 53 servant de siège pour l'obturateur 35.

Le boîtier supérieur est ici fixé sur le support au moyen de vis (non visibles sur la figure 4), cette fixation ayant pour effet de déplacer légèrement l'étrier 40 par rapport au corps 11, et de comprimer la bague d'étanchéité 44. On constate que dans cette position montée, l'étrier 40 est en appui par ses pattes 43 contre la surface supérieure 54 du support, et que par contre les deux pattes 46 ne sont plus en appui sur les bras 16 du corps 11.

Les efforts exercés par le ressort 47 sont alors transmis par l'étrier 40 directement au support 50, qui constitue un organe de réaction particulièrement résistant et garantit un fonctionnement fiable du dispositif.

On remarquera que ce résultat est obtenu par des moyens particulièrement simples et peu onéreux, ce qui constitue un avantage supplémentaire. Par ailleurs, les opérations d'assemblage du boîtier et de l'élément thermostatiques sont très simples, le sous-ensemble constitué par cet élément, le ressort 47 et l'étrier étant engagé axialement dans le corps 11, et les pattes 46 s'enclenchant élastiquement dans les encoches 17. On ne décrira pas ici le fonctionnement du dispositif thermostatique lui-même, qui n'est pas modifié par le perfectionnement selon l'invention. Ce dispositif peut par ailleurs subir de nombreuses modifications sans pour autant sortir du cadre de ce brevet. C'est ainsi que la pièce métallique servant d'appui au ressort de rappel 47 peut avoir une configuration autre que celle représentée et comporter par exemple plus de deux branches ou avoir délimiter à sa partie supérieure une collerette de forme annulaire ; l'élément thermostatique peut aussi être plus simple et ne pas comporter de tige inférieure 34.

Les moyens d'appui entre le corps 11 et la pièce métallique 40 peuvent aussi différer de ceux représentés et décrits : les bras 16 pourraient ainsi comporter des saillies radiales s'engageant dans des orifices ménagés dans les branches 42 de l'étrier.

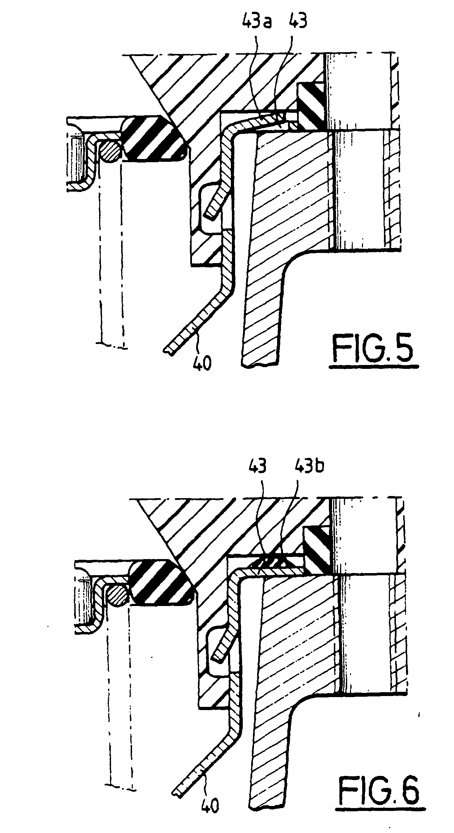

Afin d'empêcher tout bruit et une éventuelle détérioration mécanique, on prévoit de préférence comme représenté aux figures 5 et 6 des moyens élastiques entre les pattes 43 et le corps 11 du boîtier. Ces moyens élastiques ont pour effet de supprimer le jeu entre l'étrier 40 et le boîtier et par conséquent les vibrations de cet étrier.

Dans le mode de réalisation de la figure 5, un ergot élastique 43a est venu de matière avec chaque patte 43 et assure cette fonction anti-vibrations.

Dans celui de la figure 6, cette même fonction est remplie par une cale en élastomère 43b qui peut être soit mise en place au montage, soit appliquée sur les pattes 43 avant montage.

## Revendications

1. Dispositif thermostatique, comprenant un boîtier (10) au moins en partie en matière synthétique, comportant un corps (11) adapté pour être monté et fixé sur un support (50) délimitant un logement (51), un élément thermostatique (30) disposé dans le corps (11) et comportant une partie (32) fixe par rapport à ce dernier et une partie mobile (31) suivant une direction axiale (X-X), susceptible de se déplacer par rapport à la partie fixe (32) sous l'influence d'une variation de température, à l'encontre de l'action d'un ressort de rappel (47) qui prend appui sur une pièce d'appui (40) métallique s'étendant radialement en partie à l'extérieur d'une partie du corps (11), le corps (11) comportant des moyens de maintien axial de ladite pièce d'appui (40) qui sont actifs lorsque le boîtier (10) n'est pas monté sur le support (50), ce dernier comportant des moyens de maintien axial de ladite pièce d'appui (40), qui se substituent aux moyens de maintien associés au corps dès lors que le boîtier est monté et fixé sur le support, **caractérisé en ce que** la pièce (40) servant d'appui au ressort de rappel (47) comporte des tronçons s'étendant le long et à l'extérieur de cette partie du corps (11) et se prolongeant par des portions (43) sensiblement radiales qui sont adaptées pour venir en appui contre des portions correspondantes, en regard, d'une surface (54) du support (50), lorsque le boîtier (10) est monté et fixé sur le support (50).

2. Dispositif suivant la revendication 1, **caractérisé en ce que** le corps (11) du boîtier (10) comporte une partie (16) qui s'étend axialement en direction de la pièce métallique (40) et qui comporte des logements (17) débouchant vers l'extérieur et avec lesquels ladite pièce métallique coopère lorsque le boîtier (10) n'est pas monté sur son support.

3. Dispositif suivant la revendication 1, **caractérisé en ce que** le corps (11) du boîtier (10) comporte au moins deux bras (16) qui s'étendent axialement en direction de la pièce métallique (40) et qui comportent chacun une encoche (17) débouchant vers l'extérieur, ladite pièce métallique (40) comportant une coupelle annulaire (41) dans laquelle prend appui le ressort (47) et au moins deux branches (42) s'étendant à partir de ladite coupelle et qui délimitent chacune, d'une part, une patte radiale (43) s'étendant vers l'extérieur et adaptée pour venir en appui sur le support (50) et, d'autre part, une patte (46) s'étendant vers l'intérieur et qui est reçue dans l'encoche (17) du bras correspondant.

4. Dispositif suivant l'une quelconque des revendications 1 à 3, **caractérisé en ce que** le corps (11) du boîtier (10) comporte une collerette (13) qui s'étend radialement vers l'extérieur et qui est pourvue de moyens de fixation sur le support (50), la face de cette collerette dirigée vers le support (50) portant une garniture d'étanchéité (44).

5. Dispositif suivant la revendication 4, **caractérisé en ce que** les portions radiales d'extrémité (43) de la pièce métallique (40) se terminent radialement à l'intérieur de la garniture d'étanchéité (44).

6. Dispositif selon l'une quelconque des revendications 1 à 5, **caractérisé en ce que** lorsque le boîtier (10) n'est pas monté sur son support, un jeu axial "j" est ménagé entre les portions radiales (43) de la pièce métallique (40) et la surface radiale adjacente du corps (11) du boîtier, ce jeu étant tel qu'il est au moins partiellement rattrapé lorsque le boîtier (10) est monté et fixé sur le support (50).

7. Dispositif selon l'une quelconque des revendications 1 à 5, **caractérisé en ce que** des moyens élastiques (43a, 43b) sont disposés entre le corps (11) du boîtier (10) et les portions sensiblement radiales (43) de l'étrier (40).

8. Dispositif selon la revendication 7, **caractérisé en ce que** lesdits moyens élastiques comprennent des ergots (43a) venus de matière avec lesdites portions sensiblement radiales.

9. Dispositif selon la revendication 7, **caractérisé en ce que** lesdits moyens élastiques comprennent des cales en élastomère (43b).

## Patentansprüche

1. Thermostatische Vorrichtung, mit einem Gehäuse (10), das wenigstens zum Teil aus Kunststoff hergestellt ist und einen Körper (11) aufweist, der so beschaffen ist, daß er an einem einen Aufnahmesitz (51) begrenzenden Träger (50) angebracht und befestigt werden kann, und einem thermostatischen Element (30), das im Körper (11) angeordnet ist und einen in bezug auf diesen letzteren festen Teil (32) sowie einen in einer axialen Richtung (X-X) beweglichen Teil (31) umfaßt, der sich unter dem Einfluß einer Temperaturschwankung entgegen der Wirkung einer Rückstellfeder (47), die sich auf einem metallischen Abstützteil (40) abstützt, das sich radial teilweise außerhalb eines Teils des Körpers (11) erstreckt, in bezug auf den festen Teil (32) bewegen kann, wobei der Körper (11) Mittel zum axialen Halten des Abstützteils (40) aufweist, die aktiv sind, wenn das Gehäuse (10) nicht am Träger (50) angebracht ist, wobei dieser letztere Mittel zum axialen Halten des Abstützteils (40) aufweist, die die dem Körper zugeordneten Haltemittel ersetzen, sobald das Gehäuse am Träger angebracht und befestigt ist, **dadurch gekennzeichnet, daß** das Teil (40), das der Abstützung an der Rückstellfeder (47) dient, Teilstücke enthält, die sich längs dieses Teils des Körpers (11) und außerhalb desselben erstrecken und durch Abschnitte (43) verlängert sind, die im wesentlichen radial verlaufen und so beschaffen sind, daß sie sich an entsprechenden Abschnitten gegenüber einer Oberfläche (54) des Trägers (50) abstützen, wenn das Gehäuse (10) am Träger (50) angebracht und befestigt ist.

2. Vorrichtung nach Anspruch 1, **dadurch gekennzeichnet, daß** der Körper (11) des Gehäuses (10) einen Teil (16) aufweist, der sich axial in Richtung des metallischen Teils (40) erstreckt und Aufnahmesitze (17) umfaßt, die nach außen münden und mit denen das metallische Teil zusammenwirkt, wenn das Gehäuse (10) nicht an seinem Träger angebracht ist.

3. Vorrichtung nach Anspruch 1, **dadurch gekennzeichnet, daß** der Körper (11) des Gehäuses (10) wenigstens zwei Arme (16) umfaßt, die sich axial in Richtung des metallischen Teils (40) erstrecken und jeweils eine Kerbe (17) aufweisen, die nach außen mündet, wobei das metallische Teil (40) eine ringförmige Mulde (41), in der sich die Feder (47) abstützt, und wenigstens zwei Schenkel (42) aufweist, die sich von der Mulde erstrecken und jeweils einerseits einen radialen Ansatz (43), der sich nach außen erstreckt und so beschaffen ist, daß er sich an dem Träger (50) abstützen kann, und andererseits einen Ansatz (46), der sich nach innen erstreckt und in der Kerbe (17) des entsprechenden Arms aufgenommen ist, begrenzen.

4. Vorrichtung nach einem der Ansprüche 1 bis 3, **dadurch gekennzeichnet, daß** der Körper (11) des Gehäuses (10) einen Kragen (13) aufweist, der sich radial nach außen erstreckt und mit Mitteln für die Befestigung am Träger (50) versehen ist, wobei die zum Träger (50) gerichtete Fläche dieses Kragens eine Dichtung (44) trägt.

5. Vorrichtung nach Anspruch 4, **dadurch gekennzeichnet, daß** die radialen Endabschnitte (43) des metallischen Teils (40) radial in der Dichtung (44) enden.

6. Vorrichtung nach einem der Ansprüche 1 bis 5, **dadurch gekennzeichnet, daß** dann, wenn das Gehäuse (10) nicht an seinem Träger angebracht ist, zwischen den radialen Abschnitten (43) des metallischen Teils (40) und der benachbarten radialen Oberfläche des Körpers (11) des Gehäuses ein axiales Spiel "j" vorhanden ist, das derart ist, daß es wenigstens teilweise beseitigt ist, wenn das Gehäuse (10) am Träger (50) angebracht und befestigt ist.

7. Vorrichtung nach einem der Ansprüche 1 bis 6, **dadurch gekennzeichnet, daß** zwischen dem Körper (11) des Gehäuses (10) und den im wesentlichen radialen Abschnitten (43) des Bügels (40) elastische Mittel (43a, 43b) angeordnet sind.

8. Vorrichtung nach Anspruch 7, **dadurch gekennzeichnet, daß** die elastischen Mittel Vorsprünge (43a) umfassen, die mit den im wesentlichen radialen Abschnitten einteilig ausgebildet sind.

9. Vorrichtung nach Anspruch 7, **dadurch gekennzeichnet, daß** die elastischen Mittel Elastomerkeile (43b) umfassen.

## Claims

1. Thermal device, comprising a casing (10) made at least partially from a synthetic material, comprising a body (11) adapted to be mounted and fixed on a support (50) defining a housing (51), a thermostatic element (30) arranged in the body (11) and comprising a part (32) fixed relative to the latter and a part (31) movable in an axial direction (X-X), which may be moved relative to the fixed part (32) under the influence of a variation in temperature, against a return spring (47) which abuts on a metal support part (40) extending radially partially to the outside of a part of the body (11), the body (11) comprising axial retaining means for the said support part (40) which are operative when the casing (10) is not mounted on the support (50), the latter comprising axial retaining means for the said support part (40), which take the place of the retaining means associated with the body once the casing is mounted and fixed on the support, **characterised in that** the part (40) serving as a support to the return spring (47) comprises parts extending the length of and outside this part of the body (11) and extending by substantially radial portions (43) which are adapted to urge against opposing corresponding portions of a surface (54) of the support (50) when the casing (10) is mounted and fixed on the support (50).

2. Device according to claim 1, **characterised in that** the body (11) of the casing (10) comprises a part (16) which extends axially in the direction of the metal part (40) and which comprises housings (17) opening outwards with which said metal part co-operates when the casing (10) is not mounted on its support.

3. Device according to claim 1, **characterised in that** the body (11) of the casing (10) comprises at least two arms (16) which extend axially in the direction of the metal part (40) and which each comprise a groove (17) opening towards the outside, the said metal part comprising an annular cup (41) in which the spring (47) engages, and at least two legs (42) extending from the said cup and which each define, firstly, a radial lug (43) extending outwards and adapted to abut on the support (50) and, secondly, a lug (46) extending inwards which is received in the groove (17) of the corresponding arm.

4. Device according to any of claims 1 to 3, **characterised in that** the body (11) of the casing (10) comprises a flange (13) which extends radially outwards and which is provided with fixing means on the support (50), with the face of this flange directed towards the support (50) having a seal (44).

5. Device according to claim 4, **characterised in that** the end radial parts (43) of the metal part (40) terminate radially inside the seal (44).

6. Device according to any of claims 1 to 5, **characterised in that** when the casing (10) is not mounted on its support, there is an axial play "j" between the radial parts (43) of the metal part (40) and the adjacent radial surface of the body (11) of the casing, this play being such that it is at least partially taken up when the casing (10) is mounted and fixed on the support (50).

7. Device according to any of claims 1 to 6, **characterised in that** the resilient means (43a, 43b) are arranged between the body (11) of the casing (10) and the subtantially radial parts (43) of the calliper (40).

8. Device according to claim 7, **characterised in that** the said resilient means comprise lugs (43a) made from the material of the said substantially radial parts.

9. Device according to claim 7, **characterised in that** the said resilient means comprise elastomeric wedges (43b).
